# EUROPEAN PATENT SPECIFICATION

(11) **EP 3 027 409 B1**
(45) Date of publication and mention of the grant of the patent: **20.09.2023**
(21) Application number: 14755738.3
(22) Date of filing: 31.07.2014
(51) Int. Cl.: B32B 27/08, B32B 27/32, B32B 27/34, B32B 3/28, B65D 81/03

(54) **MULTILAYER FILM WITH ENHANCED INTERLAYER ADHESION**
MEHRSCHICHTIGE FOLIE MIT VERBESSERTER ZWISCHENSCHICHTHAFTUNG
FILM MULTICOUCHE PRÉSENTANT UNE ADHÉSION INTERCOUCHE AMÉLIORÉE

(30) Priority: 31.07.2013 US 201361860356 P; 09.12.2013 US 201314101104
(43) Date of publication of application: 08.06.2016
(73) Proprietor: Pregis Innovative Packaging LLC, Chicago, IL 60606 (US)
(72) Inventor: DOBRESKI, David Vincent, Canandalgua, NY 14424 (US); WETSCH, Thomas D., Naples, Florida 34 103 (US); LAWRENCE, Jennifer, Granville, NY 12832 (US); FRANCETT, Harrison W., Queensbury, NY 12804 (US)
(74) Representative: Grünecker Patent- und Rechtsanwälte PartG mbB
(86) International application number: PCT/US2014/049231
(87) International publication number: WO 2015/017697

(56) References cited:
- US-A- 5 164 267
- US-A1- 2006 210 773

## Description

### FIELD

The present disclosure relates to the preparation and use of polymer resins and polymer films in multilayer films to enhance interlayer adhesive properties.

### BACKGROUND

US 2006/210773 A1 discloses a multilayer polymeric film, comprising: a gas barrier layer made primarily of a primary barrier layer material that is a first polymer material having elevated impermeability to a gas and has a material property; and a seal layer bonded to the gas barrier layer and made primarily of a primary seal layer material that is a second polymer material of polyethylene.

Plastic film is useful in the construction of air cushions or air pillows, such is used in protective packaging applications. Air cushions and pillows are generally made from monolayer or multilayer films. Traditional multilayer films have used outer seal layers, a gas barrier layer and a tie layer positioned between the core layer and outer layer. The seal layers function to seal one section of a multilayer film to another section of the same or a second multilayer film. The tie layer acts as an adhesive layer to join the seal and core layer.

Air cushion and air pillow products can, in some cases, be inflated by the end User. For example, the user can inflate the cavity between two plies of a multilayer film, and then seal the cavity to trap the air therein. The advantage of this process is that an un-inflated cushion or pillow product takes up less room than the inflated product, lowering transport costs as well as allowing the end user to control the amount of inflation.

Multilayer films for use in packaging applications have been disclosed including a gas barrier layer of polyamide and/or ethylene vinyl alcohol (EVOH) with outer layers of polyolefin, for example polyethylene. Because these functional layers are made from resins with poor qualities of adhesion to each other (i.e., poor interlayer adhesion), an adhesive layer is positioned between the outer layer and the core layer. Such films with a tie layer between a seal layer and barrier layer are described, for example in U.S. Patent Nos. 6,982,113; 7,018,495; and 7,223,461 Known adhesive layer resins include chemically modified polyolefins that can bond with both the polyolefin outer layer and the polyamide or EVOH gas barrier layer. Conventional adhesive takers used in these types of applications are maleic anhydride (MAH) grafted polyethylene homopolymers or copolymers,

An improved system of adhering the film layers of materials that otherwise do hot adhere or do not adhere strongly is desired.

### SUMMARY

According to the present invention, such object is achieved by a film having the characteristics of claim 1. The invention concerns also method of production as defined in claims 5 and 7... Further, preferred embodiments are covered by the dependent claims.

In some embodiments, the improved material property is polarity. In general, the first material may be a polar material (having atoms or groups, for example negatively or positively charged groups, attached to the polymer backbone), while the second material is generally non-polar and lacks significant amounts of polar atoms or groups. This difference in polarity generally inhibits interlayer bond adhesion of the first and second polymers by coextrusion. The third material, however, enhances the polarity of the blended material sufficiently to allow bonding of the blended material to the first polymer with high interlayer bond adhesion (e.g., greater than about 1 1b./in or 1.75 N/cm (e.g., T-peel test)). Blended material may comprise polymers with polar groups that can bond covalently or non-covalently with the polymers of the first material. In some embodiments, the seal layer is : heat sealable to a seal layer of another film having a similar composition.

In another embodiment, the blended material comprises mostly the second material and the first material is produced from resin comprising a polyamide or an ethylene vinyl alcohol.

In another embodiment, the second material is a non-polar polyethylene; and the third material is a polar polyethylene: In another embodiment, the second material is an unmodified polyethylene; and the third material is a modified polyethylene. For example, the second material can be an unmodified polyethylene selected from metallocene linear low density polyethylene (mLLDPE), low density polyethylene (LDPE), linear low density polyethylene (LLDPE), medium density polyethylene (MDPE), or high density polyethylene (HDPE); and the third material is a polar polymer, namely an modified low density polyethylene (LDPE), an . anhydride modified linear low density polyethylene (LLDPE), and mixtures thereof

In one embodiment, the multilayer film has another seal layer on an opposite side of the barrier layer. For example, the multilayer film can have a symmetrical arrangement of layers, for example, with the seal layers disposed on opposite exposed, major surfaces of the film. In some embodiments of the multilayer film, the barrier and/or seal layer comprises a plurality of sublayers of similar composition. In many embodiments, the multilayer film has a total thickness, and the barrier layer has a thickness that is 20% or less of the total thickness of the multilayer film. In some embodiments, the multilayer film is a converted film comprising overlaid plies of a multilayer film, having seal layers of each of the plies sealed to each other in a pattern defining inflatable chambers, wherein the pattern may define an inflation region in fluid communication with the chambers, the inflation region configured to receive a nozzle to inflate the chambers.

Also disclosed herein is a method of making the multilayer film, by coextruding the first material and the blended polymer materials.

Also disclosed, is a method of producing an inflatable and sealable film for protective packaging, comprising heat sealing overlaid plies of the multilayer film, for instance wherein the seal layers of each of the plies is sealed to each other in a pattern defining inflatable chambers connected to an inflation region that receives a nozzle to inflate the chambers. In some embodiments, a method of making protective packaging includes injecting air between plies of the multilayer film to inflate the chambers and sealing the inflated chambers to seal the air therein and provide ah inflated pillow.

In some cases the converted multilayer film is configured such that when the chambers are inflated and heat sealed to provide air cushions, the air cushions display less than about 3% loss in a creep test over 7 days at 690 Pa (0.1 psi) load. In further cases, the multilayer film is configured such that when the chambers are inflated and heat sealed to provide air cushions, the air cushions display less than about 9% loss under vacuum/altitude testing under a pressure of -33 cm (-13 inches) of Hg.

### BRIEF DESCRIPTION OF THE DRAWINGS

Fig. 1 is a cross-sectional view of an embodiment of a multilayer film;
Figs. 2 and 3 are cross-sectional views of embodiments of a multilayer film with seal layers that are each formed by multiple sublayers;
Fig. 4 is a cross-sectional view of an embodiment of a multilayer film with a barrier layer formed by multiple sublayers;
Fig. 5 is a cross-sectional view of an embodiment of a multilayer film in which the barrier and seal layers are each formed by multiple sublayers;
Fig. 6 is a diagrammatic, cutaway view of a coextrusion die for making a seven coextruded-layer film, such as shown in Figs. 3 and 5;
Fig. 7 is a diagrammatic view of an embodiment of a multilayer film converted for feeding unto an inflatable protective packaging inflation and sealing device;
Fig. 8 is a table describing various embodiments of multilayer films;
Fig. 9 is a table showing an analysis of certain multilayer films of Fig. 7;
Fig. 10 is a table describing various embodiments of multilayer films lacking a tie layer, as well as films comprising a tie-layer positioned between the seal and barrier layers; and
Fig. 11 is a table showing an analysis of the multilayer films of Fig. 10 and a control layer lacking a barrier layer.

### DETAILED DESCRIPTION

The present disclosure is directed to multilayer films, such as for use in protective: packaging. In some embodiments, the multilayer films are used in making air cushions or air pillows. The multilayer films comprise a gas barrier layer and a seal layer, without a tie layer positioned between the gas barrier layer and the seal layer. Multilayer film embodiments lacking a tie layer display enhanced adhesion properties between the gas barrier layer and the seal layer. The seal layer is mixture of polymer compounds resulting in a resin with superior adhesive properties with respect to the gas barrier layer.

The embodiment of a multilayer film does not require a tie or adhesive layer to be positioned between the gas barrier layer and the seal layer. Rather, the seal layer is configured to adhere directly to the gas barrier layer, because it has characteristics relevant to its adhesion to the barrier layer that have been modified to be more compatible with those characteristics of the gas barrier layer, such as by blending in an adhesion modifier material to provide the seal layer with enhanced adhesion properties for adhering to the material of the barrier layer, for example under conditions encountered during a coextrusion process. The adhesion modifier material can be tie layer material that was previously provided as an independent layer to adhere a seal layer to a barrier layer.

The disclosed multilayer film and methods of making the multilayer film may provide for more efficient and economical production of multilayer barrier films. In many embodiments, the disclosed film may be manufactured using less complex methods and machinery. In many embodiments, the disclosed film may be manufactured using two resins and a three-layer-die co-extruder. Thus, the disclosed film and methods allow for production of films with lower costs. In some cases, the use of fewer layers may allow for films of lower thickness.

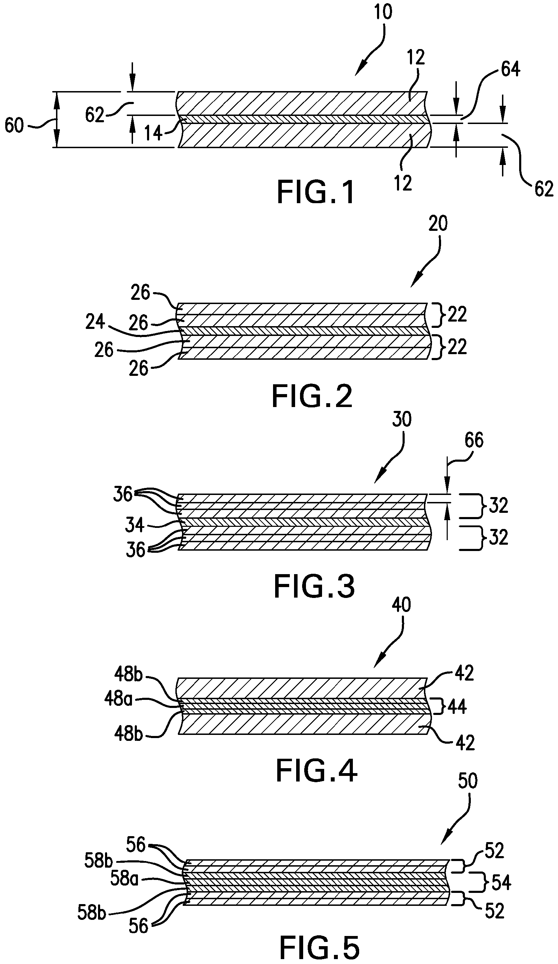

Referring to Fig. 1, seal layers 12 in embodiment of a multilayer film 10 are Referring Fig. 1, seal layers 12 multilayer positioned as an outer layer of a ply of the film. A barrier layer 14 is disposed between the seal layers 12 as a core of the film ply. This embodiment can be formed with a three-layer-die coextruder, coextruding the seal and barrier layers 12,14 each as a single co-extruded layer with no sublayers, rendering the layer itself a monolayer.

The disclosed seal layer can be adhered directly to a gas barrier layer without an adhesive layer positioned between the barrier and seal layers. In some embodiments, the seat layer may be a monolayer or the seal layer may comprise two or more sublayers with the same or similar composition of a mixture of unmodified polyethylene and an adhesion modifier that comprise anhydride modified polyethylene . For instance, multilayer film 20 of Fig. 2 has seal layers 22, each of which is formed of two sublayers 26, and multilayer film 30 of Fig, 3 has seal layers 32, each of which is formed of three sublayers 36. The layers and sublayers in the films of Figs. 1-5 are preferably arranged symmetrically in cross-section about the gas barrier layer of the film.

This arrangement of layers helps to keep the film flat, as opposed to bending out of plane or becoming wavy, but it is envisioned that asymmetrical embodiments can alternatively be made. An embodiment has a seal layer on one outer surface and a barrier layer on the other outer surface, and one embodiment has only one seal layer and one barrier layer.

Sublayers that are coextruded together and that are of the same material typically function as a single layer. In many embodiments, each layer or sublayer is typically provided by a single feed channel in the extruder. The layers and sublayers produced by each feed channel are coextruded from the extruder die to produce the multilayer film, with any sublayers combining to form layers. Thus an embodiment with three layers may be formed using a die having three or more feed channels, with the additional feed channels containing a same or similar polymer as an adjacent feed channel to produce sublayers of one or more layers. In various embodiments, the die coextruder can have an even number or odd number of feed channels. In various embodiments, the number of channels in a die may be 3 or greater, for example 4, 5, 6, 7, or more. In some cases, the number of channels in a die may be significantly greater than the number of layers in the multilayer film.

The barrier layer in the multilayer film preferably is made of materials that have elevated impermeability to air or the fluid that is desired to be contained by the film. In some embodiments, the barrier layer may comprise two or more sublayers with the same or similar composition, and in other embodiments, the barrier layer can include different compositions. For instance, while the films 10,20,30 of Figs. 1-3 have a single barrier layers 14,24,34, with no sublayers, thus providing a monolayer barrier layer; multilayer film 40 of Fig. 4 has barrier layer 44 formed of three sublayers 48a,b. Multilayer film 50 of Fig. 5 has a barrier layer 54 formed of three sublayers 58a,b, and has seal layers 52 each formed of two sublayers 56. Each embodiment shown in Figs. 1-5 has only three layers, namely, a barrier layer sandwiched between two seal layers. Other embodiments can have additional layers, such as additional inner layers, typically within a pair of barrier layers if the construction is to remain symmetrical.

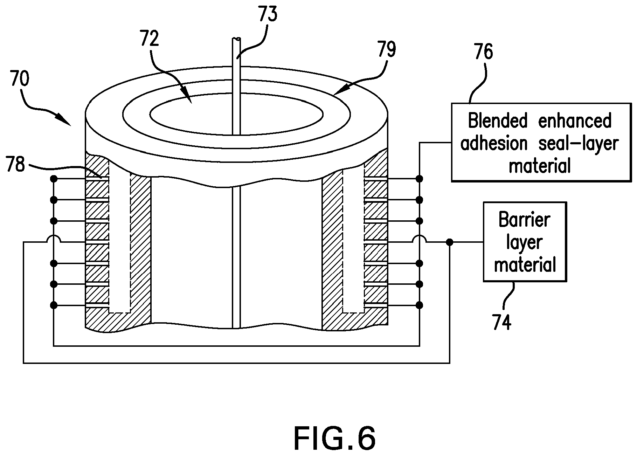

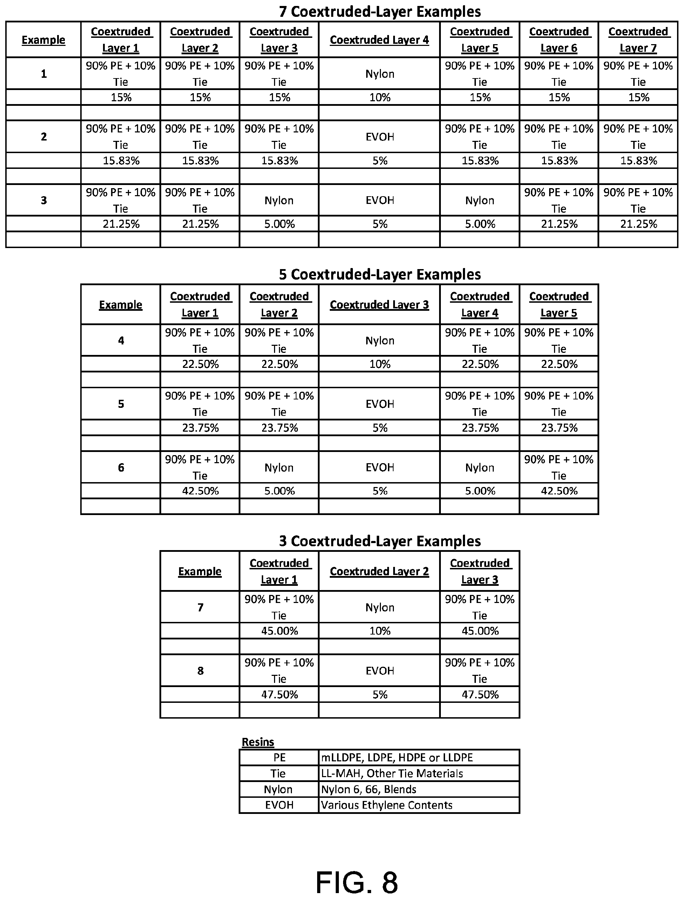

Fig. 6 shows a blown-extruder die 70 for coextruding multilayer-film layers/sublayers, such as the embodiments of Figs. 3 and 5, and Example 1 of Fig. 8. Typically, air is blown upwards in the drawing into opening 72, and hot air is extracted through tube 73. The material of the barrier and seal layers 74,76 (or sublayers) is melted and fed through concentric feed channels 78 within the extruder die, the multilayer extrusion exits at die opening 79, and the blown air the extruded into a tubular film, inflated as a opening 79, air forms extruded material into a tubular film, inflated as a bubble by the flow of air into the air column therewithin. The coextruded layers adhere to each other as they solidify due to the enhanced adhesion properties of the seal layer material. Other extrusion or manufacturing processes can be made to form a tube or non-tubular flat sheet of multilayer film material, such as cast film extrusion, which typically uses a flat, linear die opening and forms a sheet of multilayer film material that terminates at two lateral edges.

### Polymers

The disclosed multilayer films include layers compositions. In some embodiments, the disclosed layers may be selected from ethylene, amide, or vinyl polymers, copolymers, and combinations thereof.

The disclosed polymers can be polar or non-polar. As used herein, a polar molecule refers to a polymer or molecule on the polymer having an electric charge in some environments. A polar molecule or polymer may interact with other polar molecules by, for example hydrogen bonding. Polarity of a molecule often affects other characteristics, such as melting point. In some embodiments, a polar polymer may have groups with oppositely charged atoms.

The disclosed seal and barrier layer may comprise primary materials. In many cases, the gas barrier layer may be made primarily of a primary barrier layer material that is a first polymer material having elevated impermeability to a gas and has a material property.

The seal layer is made primarily of a primary seal layer material which is a second polymer material of polyethylene, that provides for enhanced sealing to another seal layer and wherein the material property of the first and second polymer materials are incompatible for producing a high-adhesion bonding of the first and second polymer materials during coextrusion. The disclosed ethylene polymer of the seal layer may be a substantially non-polar form of polyethylene. In many cases the ethylene polymer may be a polyolefin made from copolymerization of ethylene and another olefin monomer, for example an alpha-olefin. The ethylene polymer may be selected from low, medium, high density polyethylene, or a combination thereof In some cases the density of various polyethylenes may vary, but in many cases, the density of low density polyethylene may be for example from about 0.905 or lower to about 0.930 g/cm³, the density of medium density polyethylene may be for example from about 0.930 to about 0.940 g/cm³, and high density polyethylene may be for example about 0.940 to about 0.965 g/cm³ or greater.The ethylene polymer may be selected from linear low-density polyethylene (LLDPE), metallocene linear low density polyethylene (mLLDPE), high density polyethylene (HOPE), medium density polyethylene (MDPE), and low density polyethylene (LDPE).

In some embodiments the polar polymer may be a non-polar polyethylene which may be modified to impart a polar characteristic. In other embodiments the polar polymer is an ionomer (e.g. copolymers of ethylene and meth acrylic acid, E/MAA), a high vinyl acetate content EVA copolymer, or other polymer with polar characteristics. In one embodiment the modified polyethylene may be anhydride modified polyethylene. In some embodiments, the maleic anhydride is grafted onto the olefin polymer or copolymer. Modified polyethylene polymers may react rapidly upon coextruding with polyamide and other ethylene containing polymers (*e.g*., EVOH). In some cases a layer or sublayer comprising the modified polyethylene may form covalent bonds, hydrogen bonds and/or, dipole-dipole interactions with other layers or sublayers, for example sublayers or layers comprising a barrier layer. In many embodiments, modification of a polyethylene polymer may increase the number of atoms on the polyethylene that are available for bonding, for example modification of polyethylene with maleic anhydride adds acetyl groups to the polyethylene, which may then bond with polar groups of the barrier layer, for example hydrogen atoms on a nylon backbone. Modified polyethylene may also form bonds with other groups on the nylon backbone as well as polar groups of other barrier layers, for example alcohol groups on EVOH. In some embodiments, a modified polyethylene may form chain entanglements and/or van der Waals interactions with an unmodified polyethylene.

Mixtures of ethylene and other molecules may also be used. For example, ethylene vinyl alcohol (EVOH) is a copolymer of ethylene and vinyl alcohol. EVOH has a polar character and can aid in creating a gas barrier. EVOH may be prepared by polymerization of ethylene and vinyl acetate to give the ethylene vinyl acetate (EVA) copolymer followed by hydrolysis. EVOH can be obtained by saponification of an ethylene-vinyl acetate copolymer. The ethylene-vinyl acetate copolymer can be produced by a known polymerization, such as solution polymerization, suspension polymerization, emulsion polymerization and the like, and saponification of ethylene-vinyl acetate copolymer can be also carried out by a known method. Typically, EVA resins are produced via high pressure autoclave and tubular processes.

Polyamide is a high molecular weight polymer having amide linkages along the molecular chain structure. Polyamide is a polar polymer. Nylon polyamides, which are synthetic polyamides, have favorable physical properties of high strength, stiffness, abrasion and chemical resistance, and low permeability to gas, for example oxygen.

Polymers and co-polymers disclosed herein may include various additives. In some cases additives may be added during the extrusion process. In some embodiments, the additives may be colorant, anti-stats, nanoparticles, nanoparticle clay, anti-fog, filler, talc, starch, CaCO₃, slip and/or anti-block. The additives may be incorporated into the resin, or may be incorporated during extrusion. In some embodiments, additives may aid in modifying a barrier layer, for example to decrease oxygen transfer. In some embodiments, additives, for example slip and/or anti-block, may aid in controlling friction and/or adhesion of a film surface. In some cases, slip and/or anti-block may aid in controlling friction and/or adhesion of adjacent film surfaces.

### Barrier layer

The disclosed multilayer film may include one or more barrier layers that create a gas barrier. In some embodiments, the barrier layer is made from a resin that is less permeable to a given gas than other layers of the multilayer film. In some cases the gas may be ambient or pressurized air, or a constituent of air, for example, oxygen, nitrogen, carbon dioxide, etc., or a combination thereof. In many embodiments, a gas barrier layer may comprise a polymer selected from, ethylene-vinyl alcohol copolymer, polyamides, other suitable polymer, or a combination thereof. The thickness of the barrier layer may be varied to create an effective barrier to the transmission of a gas through the multilayer film, provide the multilayer film with sufficient strength, provide the multilayer film with sufficient durability, or a combination of these qualities. The use of a polyamide in the barrier layer may help increase the durability of the disclosed multilayer film.

The material of the barrier layer, when selected for its impermeability, can be selected based on its oxygen transfer rate ("OTR"), OTR may be measured by testing procedures well known in the art, for example ASTM D3985. In most cases, the OTR is less than about 100 cc/100 in.²/day. In some embodiments the OTR is less than about 30, 20, or 10. Nylon polymers and copolymers (for example Nylon 6, Nylon 6/6.6, etc.) and/or ethylene vinyl alcohol (EVOH of varying ethylene content, for example 38% ethylene or from about 15% - 50% ethylene) can be used as a gas barrier, for example, although alternative embodiments can use other suitable barrier layers.

In some embodiments, the barrier polymer may be blended with polyethylene, for example nylon or EVOH may be blended with polyethylene and/or a polar polymer (e.g. modified polyethylene, ionomer, or high vinyl acetate content EVA copolymer). In some cases, nylon or EVOH is blended with LLDPE and/or modified LLDPE to form the barrier layer. In many embodiments, wherein polyethylene (modified and/or unmodified) is blended into the barrier layer, the amount of polyethylene in the barrier layer is less than about 25%, and preferably less than about 10%. In the preferred embodiments, the thickness of the barrier layer selected to be sufficient to provide the desired air impermeability, and preferably also toughness, tear resistance, and durability to the film.

The barrier layer can have a plurality of sublayers that are of similar or different materials. For instance, several sub-layers of a same material can be co-extruded from adjacent channels in the extruder die. In one embodiment having dissimilar materials forming the barrier sub-layers, the barrier has sublayers of nylon and EVOH, such as with a nylon sublayer sandwiched between EVOH layers, or an EVOH sublayer sandwiched between Nylon layers. As described above, these barrier sublayers may be blended with other polyethylene polymers to create the sublayer. The barrier layer is typically the inner or core layer, and the seal layer is typically the outer layer of the film plies, although an alternative embodiment has a first barrier layer sandwiched between the seal layer and a second barrier layer. In most cases, the multilayer film comprises a barrier layer, or sublayers, that occupy the center channel(s) of a die and may be sandwiched between a similar number of seal layers. For example, a seven layer die extruder may have the barrier layer at layer 4 and seal layers at layers 1-3 and 5-7. In other cases barrier sublayers may be offset, for example barrier layers may be fed into a seven channel die at channel layer 3, while the seal layers are fed into the die at channel layers 1, 2, 4, 5, 6, and 7. In these and some other embodiments the thickness of the seal layers are not symmetrical. That is one seal layer is thicker than the other. In some cases the seal layers on one side of the barrier layer may comprise fewer or more sublayers than the seal layer on the opposite side. In other embodiments, the film may comprise a single barrier layer and a single seal layer, both of which may comprise sublayers.

### Seal layer

The seal layer is preferably selected to allow the multilayer film to be sealed to another film ply of the same or similar composition. For example, the other ply can be provided by folding the multilayer film over onto itself. The seal layer can be sealed to another similar seal layer by a suitable method, including sonic, heat, or adhesive sealing.

The seal layer is made of or made primarily of a polyethylene resin. In some embodiments, the seal layer is selected from LDPE (low density polyethylene), LLDPE (linear-low density polyethylene), mLLDPE (metallocene linear-low density polyethylene), HDPE (high density polyethylene), or a combination thereof.

The seal layer can be a mixture or blend of modified and unmodified polyethylene. Modified polyethylene can be created by grafting one or more molecules onto the polyethylene to help impart a polar character to the polyethylene. In some embodiments, the molecule is maleic anhydride onto a polyolefin or polyethylene. In some cases the modified polyethylene is modified LDPE or LLDPE. The principal seal layer material typically has poor interlayer adhesion to a barrier layer, that is, the typical seal layer does not adhere well to the barrier layer in an extrusion process. The presently disclosed seal layer is modified to improve its adhesion to the barrier and enhance interlayer adhesion. In an embodiment, the modified polyethylene adheres significantly better to the barrier layer resin than unmodified polyethylene. In some cases the modified polyethylene may be characterized based upon the level of anhydride as high, medium, or low maleic anhydride content resin. Alternative materials can be used, preferably that can be heat sealed to another layer of another ply of film.

The seal layer principal material is preferably modified to enhance a material property, for example its polar character. In many embodiments, a seal layer may be modified such that it is less non-polar. For example, the polar character of a seal layer may be modified such that it is more similar to that of a barrier layer, than to a non-modified seal layer. In many embodiments, the seal layer resin containing modified polyethylene is significantly more polar than the polarity of a seal layer lacking modified polyethylene, which is non-polar. Thus a blended resin will produce a seal layer of polymer chains that have non-polar character (non-modified polyethylene) and polymer chains that have polar character (modified polyethylene). The degree of polarity of a seal layer from a blended resin may be affected by the level of modification (which may be described as high, medium, or low) and/or the relative concentration of modified polyethylene in the blended resin. In many embodiments, a seal layer includes a polyethylene polymer with polar atoms or groups. The level of modification may reflect the number of polar atoms or groups per polymer and/or the type of polar atom or group.

The seal layer in an embodiment is a blend of modified and unmodified polyethylene.

In many embodiments the modified polyethylene is modified to increase the number of polar atoms or groups on the polyethylene. In many embodiments, each seal layer 12 of the disclosed multilayer film comprises a mixture of anhydride modified polyethylene and unmodified polyethylene; In some cases, the ratio of modified to unmodified polyethylene about 0.5-3:9.5-7. In one embodiment the ratio is 1:9. In another embodiment the ratio may be 1:4. Alternative embodiments use other suitable ratios. The amount of modified polyethylene in a seal layer is preferably selected to provide a desired level of adhesiveness to the barrier layer, sealability, and/or durability of the multilayer film. In many cases, adhesiveness of the seal layer is increased by increasing the amount of anhydride modified polyethylene or increasing levels of maleic anhydride in the modified polyethylene.

In some cases the blended resin includes anhydride modified LLDPE and unmodified LLDPE. In some cases the level of anhydride in the modified LLDPE may be high, medium, or low. The percentage or amount of modified polyethylene in the blended resin may be adjusted depending upon the level of anhydride content in the modified polyethylene resin and the desired adhesiveness of the seal layer. In most cases, higher content maleic anhydride content will enhance the adhesiveness of the blended resin layer. In some cases where the modified polyethylene is high content maleic anhydride, the ratio of modified polyethylene to unmodified polyethylene may be low. In cases where the modified polyethylene is low content maleic anhydride, the percentage of modified polyethylene may be higher.

In many cases, wherein the seal layer comprises a blend of modified and unmodified polyethylene, the melting temperature of the blended resin can be more than about 204°C (400 °F). In some cases, the blended resin can have a melting temperature of about 218°C (425 °F), or between about 210-227°C (410-440 °F). In some cases the melting temperature of the blended resin may be selected to aid in increasing adhesion between the barrier and seal layers. In some cases, the adhesiveness of the blended resin layer may decrease with lower melt temperatures. In some embodiments the melting temperature of a barrier layer resin, such as one containing nylon and/or EVOH, is typically higher than the melting temperature of a seal layer resin, and in some embodiments it may aid in creating the multilayer film to raise the melt temperature of the seal layer. In many cases, a seal layer with a higher melting temperature may require heating the film to a higher temperature to achieve a seal.

### Seal-barrier layer adhesion

The disclosed multilayer film comprises a seal layer in contact with the barrier layer. The composition of the disclosed seal layer is modified to be able to adhere with sufficient strength to the barrier layer having a different composition, without an adhesive layer positioned between the barrier and seal layer. In some cases, the adhesiveness of the seal layer may be controlled, for example by changing the amount of modified polyethylene in the seal layer, for example, by changing the content of maleic anhydride in the modified polyethylene, and/or by changing the melt temperature of the seal layer.

In many cases, the amount of modified polyethylene and unmodified polyethylene blended to provide the polyethylene resin of the seal layer is selected to provide a very high peel force necessary to separate the seal and barrier layers to prevent delamination or ensure that it rarely occurs. In some embodiments, the interlayer adhesion is sufficiently high that a peel force cannot be accurately measured. In most embodiments, the adhesion bonding between the barrier layer and seal layer may be measured such as by a standard 180° peel strength test, in which a layer is pulled back over itself. In most embodiments, the peel strength of the presently claimed multilayer material is greater than about 200 grams force. In some embodiments the interlayer adhesion is a high-adhesion bonding to render a peel strength of greater than about 400 grams force measured by standard, ASTM, 180° peel strength testing. In some cases the peel strength may be expressed in lb./in. or N/cm, and the peel strength of the presently claimed multilayer material is greater than about 0.5 or 1.0 lb./in, or about 0.9 or 1.75 N/cm, such as measured in a T-peel test (e.g., ASTM D1876). In preferable cases the T-peel strength of the claimed multilayer film is above 2 or 2.5 N/cm, and in some cases the peel strength (*e.g*., T-peel or 180° peel is higher than the tensile strength of one or both layers so that the layers themselves break before they peel from each other. In such blended resins comprising modified and unmodified polyethylene, the two polyethylenes may entangle and/or bond via van der Waals interactions during extrusion. The modified and unmodified polyethylene can be provided as a mixture of solid pellets particulates, such as regrind, pellets, or other particulates into the extruder.

The seal layer can be extruded as a plurality of sublayers having the same or similar composition. Multiple adjacent extrusion die channels can be used to co-extrude the multiple sublayers that bond to form the single seal layer. Such co-extrusion can be performed to result in a seal layer that has similar characteristics and behaves as does a mono-layer seal layer that is extruded through a single layer die.

Bonding between seal layer and barrier layers may be via covalent or non-covalent bonds depending on the materials used. In some cases, non-covalent bonding may include hydrogen bonding, ionic bonding, electrostatic bonding, van der Waals bonding, and hydrophobic interactions. In some cases, for example where the seal layer comprises anhydride modified polyethylene and is positioned next to a barrier layer of EVOH or polyamide, anhydride groups of the modified anhydride covalently bond to hydroxyl groups of the barrier layer, and hydrogen bonding occurs between the anhydride groups and the amide or hydroxyl groups of the barrier layer.

### Thickness

Typical multilayer films have a thickness of about 0.01-0.05 mm (0 .5-2 mil), more typically about 0.02-0.03 mm (0.75-1.25 mil), and typical films have an overall thickness of about 0.03 mm (1 mil).

Typically, the thickness of an individual layer is between about 1% and 99% of the total thickness of the multilayer film.

Typically the barrier layer may be between about 1% and 20% of the total thickness of the multilayer film, and typically the seal layers may be between about 99% and 50% of the total thickness of the multilayer film, in many embodiments the seal layer is at least 70%, but more preferably at least 80%, with each individual seal layer being between about 49.5% and 40%. Other suitable thicknesses can be used in alternative embodiments, as described below.

Typically, the barrier layer thickness 64 is at least about 1% and less than about 20%, while a preferred embodiment may be between about 3% and 17%, in other cases the barrier thickness may be about 5%, 100/a, or 15% of the thickness 60 of the multilayer film (while the thicknesses are shown with respect to Fig. 1, they can relate to the other embodiments, as applicable). Some embodiments for use in various types of packaging may benefit from a thicker barrier layer, for example where very low oxygen transfer rates are desired. In another embodiment, the barrier layer is greater than 20%, in some cases up to about 25%, 30%, or more of the multilayer film's total thickness, although other suitable thicknesses can be used in alternative embodiments. In some embodiments, the barrier layer can have a thickness of between about 1% and 7% of the total thickness of the multilayer film. In other cases, the barrier layer may be about 5%, 10%, or 15% of the multilayer film's total thickness. In further embodiments, the barrier layer may be between about 30-1%, 25-5%, or 20-10%, of the multilayer film's total thickness. In most cases, the thickness of the barrier layer is sufficient for the barrier layer to function as a gas barrier. In many embodiments, the thickness of a barrier layer comprising nylon may be more than a barrier layer comprising EVOH, for example between about 3-15% and about 1-10% respectively. In a preferred case, for example where the barrier layer is EVOH, the barrier layer may be about 5% of the multilayer film's total thickness. In another case, for example where the barrier layer is nylon, the barrier layer may be about 10% of the multilayer film's total thickness. In another case, where the barrier layer comprises a core EVOH sublayer positioned between two nylon barrier sublayers, the EVOH sublayer may be about 1-7% of the total thickness of the multilayer film and each nylon sublayer may be about 1-7% of the total thickness of the multilayer film.

In some embodiments, the seal layers can have a thickness of about 80-99% of the total thickness of the multilayer film (while the thicknesses are shown with respect to Fig. 1, they can relate to the other embodiments, as applicable). In some cases, each seal layer may be about 47.5%, 45%, or 42.5% of the multilayer film's total thickness. Where the seal layer comprises two or more sublayers, each sublayer may have the same thickness, for example where each seal layer is 45% of the total thickness of the multilayer film, and the seal layer comprises three sublayers, each sublayer is 15% of the total thickness of the multilayer film.

As described above, sublayers of a layer may comprise different thicknesses. For example, with reference to Fig. 2, wherein layer 22 comprises two sublayers 26, the two sublayers 26 may have different thicknesses.

### Extrusion

The films of the present invention may be formed by any number of well-known extrusion or coextrusion techniques, although other processes for producing the multilayer film are envisioned. In some cases, the different layers may be extruded at different temperatures to permit melting and extrusion of the material of each layer, with the composition of the seal layer modified to aid in adhering to the material of the barrier layer. In some embodiments, the barrier layer, and often further inner layers, are extruded at temperatures that are higher than the temperature of the seal layer. In some cases, the adhesiveness of the extruded layer may be altered by altering the extrusion temperature.

Suitable coextrusion processes include blown extrusion, in which the composition can be extruded in a molten state through an annular die and then blown and cooled to form a tubular, blown film. In some cases, the blown film tube can be slit and unfolded to form a flat film, and in others it is further converted in its tubular configuration. In a chill roll extrusion processes, for example, each layer resin can be co-extruded through a feedblock and die assembly. For example, the composition can be extruded in a molten state through a flat die and then cooled to form a film.

### Film conversion and use

For protective packaging applications, the multilayer film can be converted by heat sealing two plies of the multilayer film to each other in a predetermined pattern and then can be inflated with a fluid, preferably a gas, such as air. In many cases, the inflated films can be sealed by users, for example as disclosed in U.S. Patent No. 7,862,870, and U.S. Patent Application No. 13/844,658. The converted film can be configured for use in a continuous inflation and sealing device, as disclosed in the '658 application or U.S. Patent Nos. 8,454,779 and 8,061,110, for instance. Devices can be employed that convert, inflate, and seal the plies in-situ, such as disclosed in U.S. Patent No. 6,789,376. Alternatively, the film can be configured for single inflation operations, and can be provided with check valves between the plies of the multilayer film, for example as disclosed in U.S. Patent Application Publication No. 2004/0163991. In other embodiments, the film can be used in a device for filling the film with foam precursors and sealing the film for foam-in-bag protective packaging, such as disclosed U.S. Patent Application Publication No 2013/0047552.

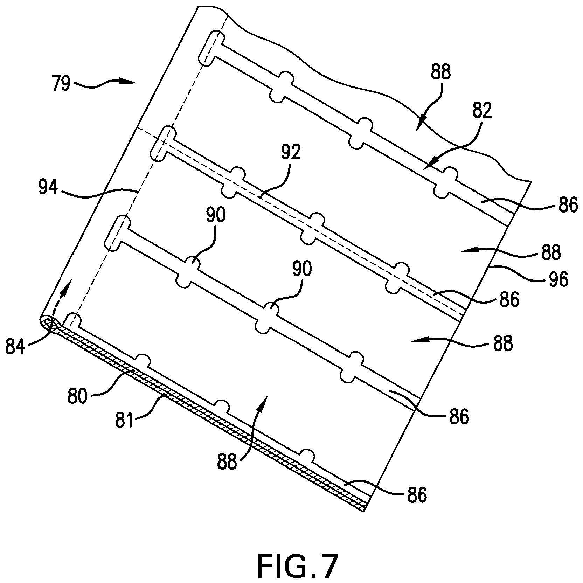

Referring to Fig. 7, during conversion of the film to provide the seal pattern to make protective packaging material 79, the tubular film material can be flattened to provide overlaying plies 80,81 of the material, or if the material is non-tubular, it can be C-folded, for example, to provide the overlaying plies. A seal pattern 82 is applied to the two plies 80,81 of film, sealing the contacting seal layers of the plies to each other. In the embodiment shown in the figure, the seal pattern 82 provides an inflation region, which may be a channel 84 to receive an inflation nozzle, and transverse seals 86 to define independent inflatable chambers 88. While channel 84 is closed in a radial direction, except into the chambers 88, to completely surround an elongated nozzle received in the channel 84, alternative embodiments have an open inflation region, for example including two flaps with independent edges opposite from the entries into the chambers 88 to receive a nozzle therebetween in the inflation region. Such flaps can be pinched about the inflation nozzle that blows the gas into the entries of the chambers 88. The edge 96 of the chambers 88 is preferably closed, such as by the fold in a C-fold film or by a longitudinal seal, as would typically be used when two independent plies are laid over each other to form opposite walls of the inflatable protective packaging pillows. Longitudinal seal segments 90 help restrain the height of the chambers 88, once inflated and provide hinge lines in the inflated protective packaging. Weakened lines can also be applied to allow a user to selectively separate from the remaining stock of protective packaging material 79 a length of inflated protective packaging material 79 with a variable number of chambers 88 attached to each other. Such weakened line can be provided, for example, by a line of perforations 92 or other suitable structure. A seal line can be applied such as at line 94, such as by heat sealing or other suitable method, longitudinally across the transverse seal lines to seal the abutting seal layers together to seal the inflated chambers. Other seal segments can be added as known in the art, such as within the chambers, contacting or spaced from the transverse seals 86. Preferred sealing operations involve sufficiently heating the seal layers to stick to each other, such as by melting and cooling at least part of the seal layer. The barrier layer retains a gas, such as air, or other fluid in the inflated chambers. In some embodiments, the fluid may be a foam. The multilayer film can be converted into configurations, and inflated and sealed as disclosed, for example, in the contents of U.S. Patent Nos. 6,789,376; 7,862,870, 8,061,110; and 8,454,779; U.S. Patent Application Publication No. 2013/0047552; and U.S. Patent Application No. 13/844,658.

### EXAMPLES

The disclosure will now be illustrated with working examples, which are intended to illustrate the working of the disclosure and not intended to be taken restrictively to imply limitations on the scope of the present disclosure. The examples below were made with a construction that is summarized in Fig. 8. Other embodiments are also envisioned.

### Example 1: Seven coextruded-layer film with polyamide nylon barrier layer (Fig. 3):

A nylon barrier-layer 34 core was positioned between two seal layers 32 of a blended resin comprising polyethylene and anhydride modified polyethylene. The ratio of polyethylene:modified polyethylene was 90:10. In this example, the barrier layer 34 was made as a single coextruded-layer, and each seal layer 32 was formed by coextruding three sublayers of the same composition.

The nylon barrier-layer 34 had a thickness 64 of 10% of the total thickness 60 of the multilayer film 30. Each of the seal-layer sublayers 36 had a thickness 66 of 15% of the total thickness 60 of the multilayer film. Thus, each of the two seal-layers 32 made up 45% of the total thickness 60 of the multilayer film 30.

### Example 2: Seven coextruded-layer film with ethylene vinyl alcohol barrier layer (Fig. 3):

A single-extrusion, EVOH, barrier layer 34 core was positioned between two seal layers 32 of a blended resin comprising polyethylene and anhydride modified polyethylene. The ratio of polyethylene:modified polyethylene was 90:10. In this example, the barrier layer 34 was made as a single coextruded-layer, and each seal layer 32 was formed by coextruding three sublayers of the same composition.

The EVOH barrier-layer 34 had a thickness 64 of 5% of the total thickness 60 multilayer film 30. Each of the seal-layer sublayers 36 had a thickness 66 of 15.83% of the total thickness 60 of the multilayer film. Thus, each of the two seal-layers 32 made up 47.5% of the total thickness 60 of the multilayer film 30.

### Example 3: Seven coextruded-layer film with ethylene vinyl alcohol and polyamide nylon barrier layer (Fig. 5):

A barrier layer 54 was positioned between two seal layers 52 of a blended resin comprising polyethylene and anhydride modified polyethylene. The ratio of polyethylene:modified polyethylene was 90:10. In this example, the barrier layer 54 was made of a core sublayer 58a of EVOH sandwiched between two sublayers 58b of nylon, and each seal layer 52 was formed by coextruding two sublayers of the same composition.

The EVOH and nylon sublayers 54a,b each had a thickness of 5% of the total thickness 60 multilayer film 50. Each of the seal-layer sublayers 56 had a thickness 66 of 21.25% of the total thickness 60 of the multilayer film. Thus, each of the two seal-layers 52 made up 42.5% of the total thickness 60 of the multilayer film 50.

### Example 4: Five coextruded-layer film with polyamide nylon barrier layer (Fig. 2):

A nylon barrier-layer 24 core was positioned between two seal layers 22 of a blended resin comprising polyethylene and anhydride modified polyethylene. The ratio of polyethylene:modified polyethylene was 90:10. In this example, the barrier layer 24 was made as a single coextruded-layer, and each seal layer 22 was formed by coextruding two sublayers of the same composition.

The nylon barrier-layer 24 had a thickness 64 of 10% of the total thickness 60 multilayer film 20. Each of the seal-layer sublayers 26 had a thickness 66 of 22.5% of the total thickness 60 of the multilayer film. Thus, each of the two seal-layers 22 made up 45% of the total thickness 60 of the multilayer film 20.

### Example 5: Five coextruded-layer film with ethylene vinyl alcohol barrier layer (Fig. 2):

An EVOH barrier-layer 24 core was positioned between two seal layers 22 of a blended resin comprising polyethylene and anhydride modified polyethylene. The ratio of polyethylene:modified polyethylene was 90:10. In this example, the barrier layer 24 was made as a single coextruded-layer, and each seal layer 22 was formed by coextruding two sublayers of the same composition.

The EVOH barrier-layer 24 had a thickness 64 of 5% of the total thickness 60 multilayer film 20. Each of the seal-layer sublayers 26 had a thickness 66 of 23.75% of the total thickness 60 of the multilayer film. Thus, each of the two seal-layers 22 made up 47.5% of the total thickness 60 of the multilayer film 20.

### Example 6: Five coextruded-layer film with ethylene vinyl alcohol and polyamide nylon barrier layer (Fig. 4):

A barrier layer 44 was positioned between two seal layers 42 of a blended resin comprising polyethylene and anhydride modified polyethylene. The ratio of polyethylene:modified polyethylene was 90:10. In this example, the barrier layer 44 was made of a core sublayer 48a of EVOH sandwiched between two sublayers 48b of nylon, and each seal layer 42 was formed by a single-coextruded layer and had the same composition.

The EVOH and nylon sublayers 44a,b each had a thickness of 5% of the total thickness 60 multilayer film 40. Each of the two seal-layers 42 made up 42.5% of the total thickness 60 of the multilayer film 40.

### Example 7: Three coextruded-laver film with polyamide nylon barrier layer (Fig. 1):

A nylon barrier-layer 14 core was positioned between two seal layers 12 of a blended resin comprising polyethylene and anhydride modified polyethylene. The ratio of polyethylene:modified polyethylene was 90:10. In this example, each of the barrier layer 14 and seal layers 12 was made as a single coextruded-layer, and the two seal layers 12 had the same composition.

The nylon barrier-layer 14 had a thickness 64 of 10% of the total thickness 60 multilayer film 10. Each of the two seal-layers 42 made up 45% of the total thickness 60 of the multilayer film 10.

### Example 8: Three coextruded-layer film with ethylene vinyl alcohol barrier layer (Fig. 1):

A EVOH barrier-layer 14 core was positioned between two seal layers 12 of a blended resin comprising polyethylene and anhydride modified polyethylene. The ratio of polyethylene:modified polyethylene was 90:10. In this example, each of the barrier layer 14 and seal layers 12 was made as a single coextruded-layer, and the two seal layers 12 had the same composition.

The EVOH barrier-layer 14 had a thickness 64 of 5% of the total thickness 60 multilayer film 10. Each of the two seal-layers 42 made up 47.5% of the total thickness 60 of the multilayer film 10.

### Example 9: Testing of seven layer film and five layer film:

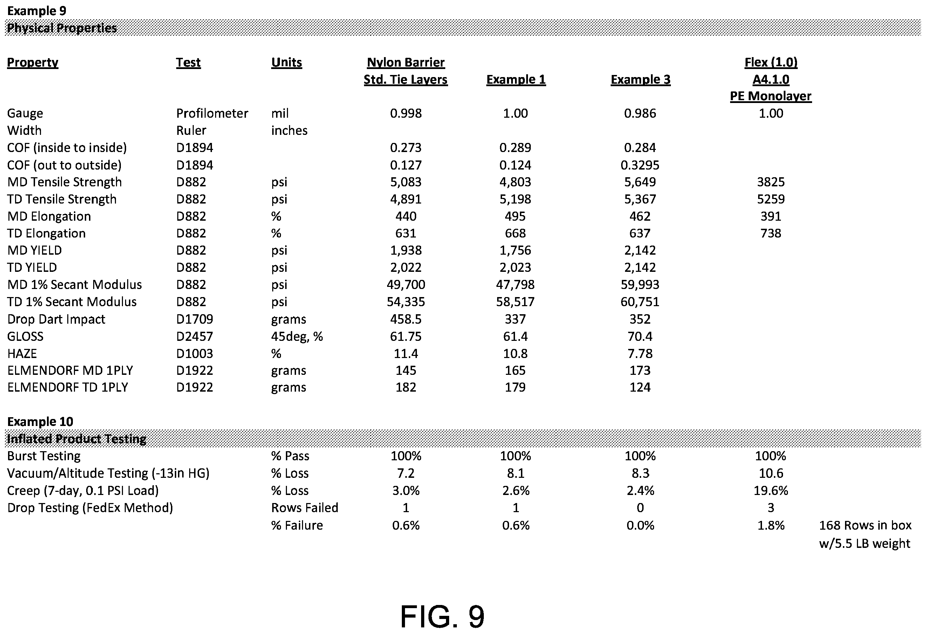

The physical characteristics of the above films of Examples 1 and 3 were examined using standard ASTM tests that are well known in the art. These two films were also used to construct air cushions, which were also tested. The results from these two films were compared to two other films, and are summarized in Fig. 9. These two comparison films were a Nylon containing film with a standard modified polyethylene tie layer (Nylon Std. Tie Layers), and a Flex (1.0) A4.1.0. PE Monolayer film.

The thickness of each film was determined by measuring the gauge of the film using standard measurement protocols for gauge with results given in mils (1/1000 of an inch).

The coefficient of friction (COF) for the films was determined using standard ASTM D1894 COF test procedures. The COF was tested in two directions: inside to inside, and outside to outside. The results are shown in Fig. 9.

The tensile strength of the films was determined using the ASTM D882 standard test methods for determining the tensile properties of thin plastic sheeting. Two orientations were tested, the machine direction (MD) and transverse direction (TD), oriented with respect to the direction in which the films were extruded. This test was used to determine tensile strength, elongation, yield, and the 1% secant modulus. Tensile strength values at break are given in psi. The elongation percentages at break are given as percentages of original sample length. The yield is given in psi. The 1% secant modulus is also given in psi.

The films were also tested for their impact resistance using the standard ASTM D1709 drop dart impact test procedures.

The film gloss was also measured. The percentage of light reflected after striking the film at a 45° angle is given as a percentage in Fig. 9.

The scattering of light by the films, haze, was also measured. In this test, the percentage of light transmitted through the film that is deflected more than 2.5° is given as a percentage.

The tear strength of the films was tested using an Elmendorf test. In this test, the force necessary to propagate a cut in the film is given in grams.

### Example 10: Air cushion testing:

The films of Example 9 were used to create air cushions. The inflated air cushions were tested for burst strength, vacuum, creep, and drop testing using standard methods. For example, the drop test was performed according to the standard FedEx method, which is known in the art. Results are summarized in Fig. 9.

### Example 11: Testing of seven layer films:

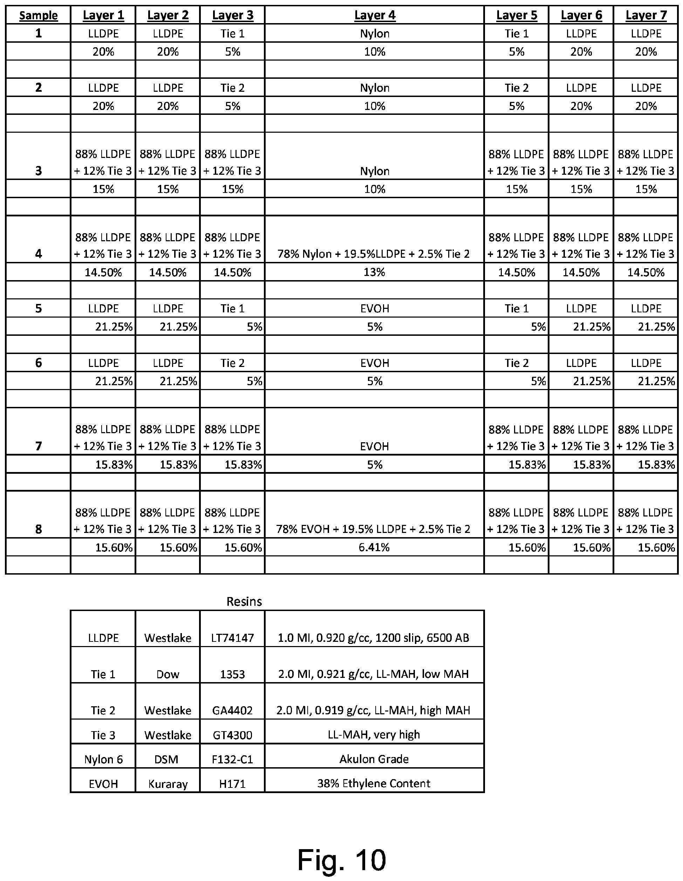

Films made by a seven channel die co-extruder were analyzed. The make-up of the various films is presented in Fig. 10: The films samples were samples 1-8 and a control. The control film lacked a barrier layer. Samples 1-4 comprised a nylon barrier layer and samples 5-8 comprised EVOH in the barrier layer. In Fig. 10 is shown the composition of the various resins used in the tested samples.

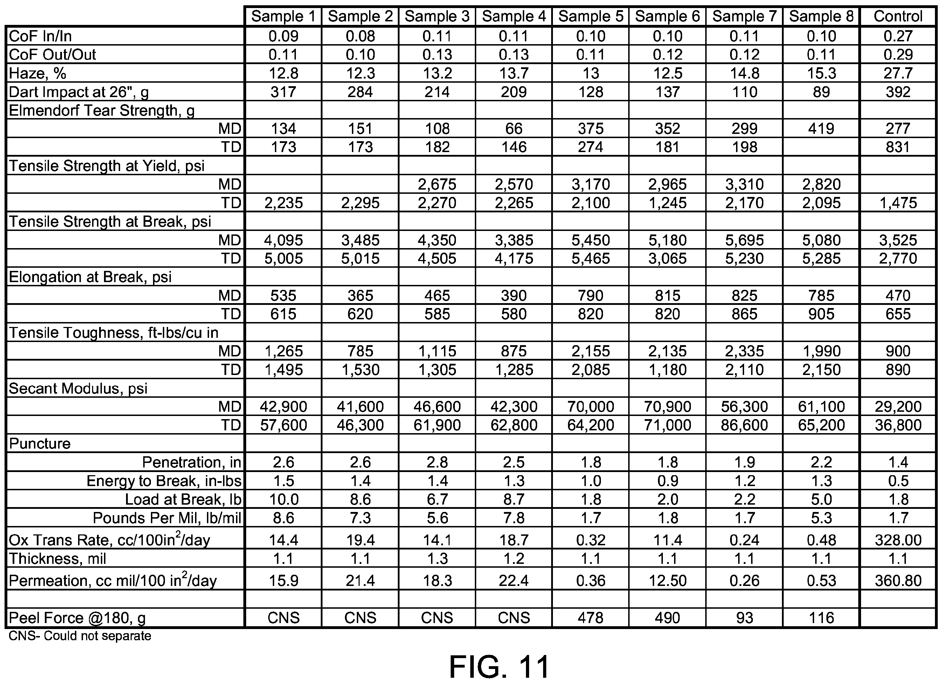

The samples described in Fig. 10 were tested using the methods described previously. In addition, sample films were tested for oxygen transfer rate (Ox Trans Rate or OTR) and peel force (180° peel strength test). The methods used are described above. Results from the tests are presented at Fig. 11. These tests confirmed that the disclosed multilayer film embodiments having blended seal layers (*e.g*., samples 3-4 and 7-8) had performance characteristics similar to films having a tie layer positioned between the barrier and seal layers (e.g., samples 1-2 and 5-6).

## Claims

1. A multilayer polymeric film, comprising:
a gas barrier layer made primarily of a primary barrier layer material that is a first polymer material having elevated impermeability to a gas and has a material property; and
a seal layer bonded directly to the gas barrier layer and made primarily of a primary seal layer material that is a second polymer material of polyethylene, wherein the material property of the first and second polymer materials are incompatible for producing a high-adhesion bonding of the first and second polymer materials during co-extrusion;
wherein the seal layer is made of a blended polymer material comprising a blend of the primary material of the seal layer and a third polymer material, which third polymer material is blended in an amount sufficient to improve the material property of the primary material of the barrier layer so that the seal layer is bondable directly to the barrier layer with high adhesion by coextrusion;
wherein at least one of the primary materials is polyethylene of density lower than that of HOPE; and
wherein the third polymer material is selected from the group consisting of an anhydride modified low density polyethylene (LDPE), an anhydride modified linear low density polyethylene (LLDPE), and mixtures thereof, wherein the modification increases the number of polar atoms or groups on the polyethylene.

2. The multilayer film of claim 1, wherein the multilayer film has a total thickness, and the barrier layer has a thickness of 20% or less of the total thickness of the multilayer film.

3. The multilayer film of any of claims 1 to 2, wherein the barrier layer comprises two or more sublayers, wherein the sublayers are made up of the same or different first materials comprising one or more of a polyamide, an ethylene vinyl alcohol copolymer, a polyethylene, and a modified polyethylene.

4. A method of producing an inflatable and sealable film for protective packaging, comprising heat sealing overlaid plies of the multilayer film of any of claims 1 to 3, the seal layers of each of the plies sealed to each other in a pattern defining inflatable chambers connected to an inflation region that received a nozzle to inflate the chambers.

5. A converted film comprising overlaid plies of the multilayer film, each ply comprising the multilayer film of any of claims 1 to 3, wherein the seal layer of each of the plies is sealed to a seal layer of the other ply in a pattern defining inflatable chambers.

6. A method of making the multilayer film of any of claims 1 to 4, comprising coextruding the barrier layer and the seal layer, thereby making a multilayer film.

## Patentansprüche

1. Mehrschichtige Polymerfolie, umfassend:
eine Gasbarriereschicht, die hauptsächlich aus einem primären Barriereschichtmaterial gemacht ist, das ein erstes Polymermaterial ist, besitzend erhöhte Gasundurchlässigkeit und besitzend eine Materialeigenschaft; und
eine Siegelschicht, die direkt mit der Gasbarriereschicht verbunden ist und hauptsächlich aus einem primären Siegelschichtmaterial gemacht ist, das ein zweites Polymermaterial aus Polyethylen ist, wobei die Materialeigenschaft des ersten und des zweiten Polymermaterials nicht kompatibel sind, um eine hochadhäsive Bindung des ersten und des zweiten Polymermaterials während Coextrusion zu erzeugen;
wobei die Siegelschicht aus einem gemischten Polymermaterial gemacht ist, umfassend eine Mischung aus dem primären Material der Siegelschicht und einem dritten Polymermaterial, deren drittes Polymermaterial in einer Menge gemischt ist, die ausreicht, um die Materialeigenschaft des primären Materials der Barriereschicht zu verbessern, so dass die Siegelschicht direkt an die Barriereschicht mit hoher Haftung durch Koextrusion gebunden werden kann;
wobei mindestens eines der primären Materialien Polyethylen mit einer geringeren Dichte als HDPE ist; und
wobei das dritte Polymermaterial aus der Gruppe ausgewählt ist, bestehend aus einem anhydridmodifizierten Polyethylen niedriger Dichte (LDPE), einem anhydridmodifizierten linearen Polyethylen niedriger Dichte (LLDPE) und Mischungen davon, wobei die Modifikation die Anzahl der polaren Atome oder Gruppen am Polyethylen erhöht.

2. Die mehrschichtige Folie nach Anspruch 1, wobei die mehrschichtige Folie eine Gesamtdicke besitzt und die Barriereschicht eine Dicke von 20 % oder weniger der Gesamtdicke der mehrschichtigen Folie besitzt.

3. Die mehrschichtige Folie nach irgendeinem der Ansprüche 1 bis 2, wobei die Barriereschicht zwei oder mehr Unterschichten umfasst, wobei die Unterschichten aus den gleichen oder aus unterschiedlichen ersten Materialien aufgebaut sind, umfassend ein oder mehrere eines Polyamids, eines Ethylen-Vinylalkohol-Copolymers, eines Polyethylens und eines modifizierten Polyethylens.

4. Verfahren zum Herstellen einer aufblasbaren und siegelbaren Folie für Schutzverpackungen, umfassend Heißsiegeln übereinanderliegender Lagen der mehrschichtigen Folie nach irgendeinem der Ansprüche 1 bis 3, wobei die Siegelschichten jeder der Lagen in einem Muster miteinander versiegelt sind, das aufblasbare Kammern definiert, die mit einem Aufblasbereich verbunden sind, der eine Düse zum Aufblasen der Kammern aufnimmt.

5. Konvertierte Folie, umfassend übereinanderliegende Lagen der mehrschichtigen Folie, wobei jede Lage die mehrschichtigen Folie nach irgendeinem der Ansprüche 1 bis 3 umfasst, wobei die Siegelschicht jeder der Lagen mit einer Siegelschicht der anderen Lage in einem Muster versiegelt ist, das aufblasbare Kammern definiert.

6. Verfahren zum Machen der mehrschichtigen Folie nach irgendeinem der Ansprüche 1 bis 4, umfassend Coextrudieren der Barriereschicht und der Siegelschicht, wodurch eine mehrschichtige Folie gemacht wird.

## Revendications

1. Film polymérique multicouche, comprenant :
une couche barrière aux gaz constituée principalement d'un matériau de couche barrière primaire qui est un premier matériau polymère ayant une imperméabilité élevée à un gaz et a une propriété de matériau ; et
une couche de scellage liée directement à la couche barrière aux gaz et constituée principalement d'un matériau de couche de scellage primaire qui est un deuxième matériau polymère de polyéthylène, dans lequel la propriété de matériau des premier et deuxième matériaux polymères sont incompatibles pour produire une liaison à haute adhérence des premier et deuxième matériaux polymères pendant une coextrusion ;
dans lequel la couche de scellage est constituée d'un matériau polymère mélangé comprenant un mélange du matériau primaire de la couche de scellage et d'un troisième matériau polymère, lequel troisième matériau polymère est mélangé selon une quantité suffisante pour améliorer la propriété de matériau du matériau primaire de la couche barrière de sorte que la couche de scellage peut être liée directement à la couche barrière avec une adhérence élevée par coextrusion ;
dans lequel au moins l'un des matériaux primaires est du polyéthylène de densité inférieure à celle d'un HDPE ; et
dans lequel le troisième matériau polymère est choisi dans le groupe constitué d'un polyéthylène basse densité (LDPE) modifié par anhydride, d'un polyéthylène basse densité linéaire (LLDPE) modifié par anhydride, et de mélanges de ceux-ci, la modification augmentant le nombre d'atomes ou de groupes polaires sur le polyéthylène.

2. Film multicouche selon la revendication 1,
dans lequel le film multicouche a une épaisseur totale, et la couche barrière a une épaisseur égale à 20 % ou moins de l'épaisseur totale du film multicouche.

3. Film multicouche selon l'une quelconque des revendications 1 à 2,
dans lequel la couche barrière comprend deux sous-couches ou plus, dans lequel les sous-couches sont constituées de premiers matériaux identiques ou différents comprenant un ou plusieurs d'un polyamide, d'un copolymère éthylène-alcool vinylique, d'un polyéthylène, et d'un polyéthylène modifié.

4. Procédé de production d'un film gonflable et scellable pour un emballage de protection, comprenant des plis superposés thermosoudables constitués du film multicouche selon l'une quelconque des revendications 1 à 3, les couches de scellage de chacun des plis étant scellées les unes aux autres selon un motif définissant des chambres gonflables reliées à une région de gonflage qui a reçu une buse pour gonfler les chambres.

5. Film transformé comprenant des plis superposés constitués du film multicouche, chaque pli comprenant le film multicouche selon l'une quelconque des revendications 1 à 3, dans lequel la couche de scellage de chacun des plis est scellée à une couche de scellage de l'autre pli selon un motif définissant des chambres gonflables.

6. Procédé de fabrication du film multicouche selon l'une quelconque des revendications 1 à 4, comprenant la coextrusion de la couche barrière et de la couche de scellage, réalisant ainsi un film multicouche.
